# FASCICULE DE BREVET EUROPEEN

(11) **EP 3 638 621 B1**
(45) Date de publication et mention de la délivrance du brevet: **07.08.2024**
(21) Numéro de dépôt: 18735677.9
(22) Date de dépôt: 14.06.2018
(51) Int. Cl.: C01B 25/26

(54) **PROCEDE DE PREPARATION D'UN PHOSPHATE DE VANADIUM**
VERFAHREN ZUR HERSTELLUNG EINES VANADIUMPHOSPHATS
METHOD FOR PREPARING A VANADIUM PHOSPHATE

(30) Priorité: 16.06.2017 FR 1755505
(43) Date de publication de la demande: 22.04.2020
(73) Titulaire: SPECIALTY OPERATIONS FRANCE, 69003 Lyon (FR)
(72) Inventeur: CHOMETTE, Cyril, 93300 Aubervilliers (FR); BUISSETTE, Val rie, 93300 Aubervilliers (FR); BRAIDA, Marc-David, 93300 Aubervilliers (FR); LE MERCIER, Thierry, 93300 Aubervilliers (FR)
(74) Mandataire: Senninger, Thierry
(86) Numéro de dépôt international: PCT/FR2018/051420
(87) Numéro de publication internationale: WO 2018/229447

(56) Documents cités:
- FR-A1- 3 042 313
- F.PREUSS ET AL.: "Polyphospatvanadates", Z. NATURFORSCH., vol. 30b, 1975, pages 334 - 339, XP002781020
- SERRAS PAULA ET AL: "Electrochemical performance of mixed valence Na3V2O2x(PO4)2F3-2x/C as cathode for sodium-ion batte", JOURNAL OF POWER SOURCES, vol. 241, 1975, pages 56 - 60, XP028675776, ISSN: 0378-7753, DOI: 10.1016/J.JPOWSOUR.2013.04.094
- KUNIKO CHIHARA ET AL: "Cathode properties of Na3M2(PO4)2F3 [M = Ti, Fe, V] for sodium-ion batteries", JOURNAL OF POWER SOURCES, ELSEVIER SA, CH, vol. 227, 1 April 2013 (2013-04-01), pages 80 - 85, XP002759422, ISSN: 0378-7753, [retrieved on 20121031], DOI: 10.1016/J.JPOWSOUR.2012.10.034

## Description

La présente invention est relative à un procédé de préparation d'un phosphate d'ammonium et de vanadium de formule (NH₄)(VO₂)(HPO₄). Le VPO⁴ peut être utilisé pour la préparation de NVPF.

### Le problème technique

Le composé V^{III}PO₄ (désigné par la suite par VPO₄) est utilisé en tant qu'intermédiaire chimique dans la fabrication de NVPF qui est le composé de formule Na₃V₂(PO₄)₂F₃ utilisé dans les cathodes de batteries au sodium. Comme divulgué dans Chem. Mater. 2016, 28, 7683-7692, il est nécessaire de bien contrôler la stoechiométrie du NVPF. Pour obtenir des batteries présentant une bonne efficacité, il est donc préférable d'utiliser du NVPF présentant une pureté adéquate. En particulier, le VPO₄ utilisé pour produire le NVPF doit contenir une quantité aussi basse que possible d'impuretés, telle que notamment V(PO₃)₃ et V₂O₃ et de VO₂.

Le VPO₄ est obtenu par réduction du phosphate de formule (NH₄)(VO₂)(HPO₄) (désigné par la suite par le terme "phosphate de vanadium"). Cette réduction peut s'opérer à haute température en présence d'hydrogène ou bien par carboréduction par chauffage à haute température d'un mélange formé de NH₄H₂PO₄, de V₂O₅ et de noir de carbone comme cela est enseigné dans US 6,387,56 ainsi que dans Solid State Sciences 2006, 8, 1215-1221. La réaction de carboréduction est alors la suivante :

V₂O₅ + 2 NH₄H₂PO₄ + noir de C → 2 VPO₄+ 2 NH₃ + H₂O + CO + C_{excès} (I)

Des méthodes de préparation du phosphate de vanadium à partir de NH₄H₂PO₄ et de V₂O₅ sont connues. Le procédé décrit dans Z. Naturforsch 1975, 30b, 334-339 repose sur l'ajout du V₂O₅ solide dans une solution aqueuse de NH₄H₂PO₄ portée à ébullition. Pour obtenir le phosphate de vanadium avec un bon état de pureté, il est nécessaire de laver le précipité, ce qui diminue le rendement (60%).

Une autre méthode décrite dans Chem. J. Chin. Univ. 2000, 21, 1177-1179 repose sur la réaction entre NH₄VO₃ et NH₄H₂PO₄ en solution aqueuse. Cependant, la réaction conduit à la libération de NH₃ ou de NH₄⁺ dans les rejets.

Le problème technique à résoudre consistait donc à mettre au point un procédé de préparation d'un phosphate de vanadium de bonne pureté, économique, avec un bon rendement et en utilisant des conditions simples.

Pour obtenir un VPO₄ présentant une pureté adéquate, il est nécessaire d'utiliser un phosphate de vanadium ayant une bonne pureté. En particulier, le phosphate de vanadium doit présenter une teneur minimale en V₂O₅ résiduel dont la décomposition lors de l'étape de réduction conduit à la présence de V₂O₃ dans le VPO₄. De la même manière, le phosphate de vanadium doit présenter une teneur minimale en phosphate d'ammonium résiduel afin d'éviter la formation d'impuretés riches en élément phosphore et conduisant à un VPO₄ de moindre cristallinité.

### Arrière-plan technique

J. Power Sources 2014, 264, 123-127 décrit la préparation de VPO₄ par le mélange de V₂O₅ et NH₄H₂PO₄ dans de l'eau en présence de citrate et le chauffage du mélange à une température de 250°C pendant 20 h, puis le produit est lavé.

Dans l'article "Vibrational Spectroscopic Investigation of Li Extraction from Monoclinic and Rhombohedral Li3V2(PO4)3" de Burba et al., V₂O₅ et NH₄H₂PO₄ sont agités à l'état solide dans l'acétone en présence de Li₂CO₃ pour conduire à Li₃V₂(PO₄)₃.

La demande française FR 3042313 décrit de façon semblable à US 6,387,56 le mélange de V₂O₅ et de NH₄H₂PO₄ à l'état solide, et le chauffage à haute température (800°C) du mélange solide. La réaction conduit à VPO₄ et pas au phosphate de vanadium. Il n'est de plus pas fait mention d'un mélange précurseur auquel est ajouté de l'eau comme dans le procédé de la présente invention.

L'article scientifique "polyphosphovanadate" dans Naturforshung 1975, vol. 30b, 334-339 décrit en page 338 la préparation de NH₄HVPO₆ à partir de V₂O₅ par un procédé utilisant une quantité d'eau importante (300 g pour 49,76 g de solides, soit une proportion initiale eau/solides de 602,9% > 200%) portée à ébullition ("zum sieden").

L'article scientifique J. Power Sources 2013, 241, 56-60 décrit un procédé de production de VPO₄ par chauffage d'un mélange de V₂O₅ et de NH₄H₂PO₄ à une température de 300°C ou de 850°C.

### Figures

**Fig. 1** représente l'évolution des clichés de microscopie MEB du mélange de l'exemple 1 au cours du temps. On a représenté aussi les échantillons prélevés et placés dans de l'eau (méthode visuelle décrite plus loin).
**Fig. 2** représente l'évolution des diffractogrammes (intensité vs. angle 20 - 2théta) du mélange de l'exemple 1 au cours du temps.
**Fig. 3** représente le diffractogramme du mélange de l'exemple 4 après calcination à 800°C sous air d'un phosphate de vanadium préparé à partir d'un mélange contenant 500% d'eau ajoutée. On observe la formation de VPO₄ et de VO₂. L'autre diffractogramme correspond à un VPO₄ obtenu à partir d'un mélange contenant 200% d'eau ajoutée : dans ce cas, on n'observe pas le pic de VO₂.

### L'invention

L'invention est relative à un procédé de préparation du phosphate de formule (NH₄)(VO₂)(HPO₄) consistant à agiter un mélange formé de V₂O₅ et de NH₄H₂PO₄ à l'état solide dans lequel a été ajoutée de l'eau dans une proportion initiale comprise entre 0,1% et 200,0%, cette proportion étant calculée par rapport à l'ensemble du mélange.

La réaction entre les deux réactifs s'écrit :

V₂O₅ + 2 NH₄H₂PO₄ → 2 (NH₄)(VO₂)(HPO₄) + H₂O (II)

Le mélange de départ désigné par la suite sous le terme "mélange précurseur" comprend donc les deux réactifs, V₂O₅ et NH₄H₂PO₄, à l'état solide ainsi que de l'eau. Ces deux réactifs sont de préférence présents sous forme de poudres. On peut utiliser des poudres dont les particules présentent un diamètre d₅₀ d'au plus 100 µm, voire d'au plus 50 µm, d₅₀ étant le diamètre médian obtenu à partir d'une distribution de tailles en volume déterminée par un granulomètre laser de marque Coulter Beckman modèle LS I3 320. Il est préférable d'utiliser un mélange précurseur pour lequel les deux réactifs de départ ont été intimement mélangés.

Le phosphate de vanadium qui est obtenu (NH₄)(VO₂)(HPO₄) peut se présenter sous deux formes polymorphiques α et β. La réaction (II) peut conduire plutôt à la forme β.

Pour obtenir un phosphate de vanadium de bonne qualité, il est préférable d'utiliser un mélange précurseur proche de la stoechiométrie de la réaction (II). On peut ainsi par exemple utiliser un mélange précurseur comprenant V₂O₅ et NH₄H₂PO₄ dans un rapport molaire initial V / P compris entre 0,9 et 1,1, voire entre 0,95 et 1,05.

Le mélange précurseur comprend de l'eau dans une proportion donnée d'au plus 200,0%, par exemple comprise entre 0,1% et 200,0%, voire entre 1,0% et 200,0%, cette proportion étant calculée en poids par rapport à l'ensemble des deux réactifs (c'est-à-dire de V₂O₅ et de NH₄H₂PO₄). La proportion d'eau est donc donnée par la formule [masse d'eau/masse de V₂O₅+NH₄H₂PO₄ x100]. Cette proportion peut être d'au moins 0,5%, voire d'au moins 0,7%, voire encore d'au moins 1,0%. On notera qu'il s'agit-là de la proportion initiale en eau qui est ajoutée car cette proportion peut varier au cours de la réaction en fonction notamment de l'avancée de la réaction (II) et de la température à laquelle cette réaction est conduite.

De façon surprenante, l'eau qui est ajoutée a pour fonction d'accélérer la réaction chimique entre les deux réactifs de départ. Cet effet est constaté même à partir d'une faible proportion en eau. Ainsi, comme cela est visible dans les exemples, on peut constater qu'en présence d'une proportion d'eau ajoutée même faible de l'ordre de 1,0%, on peut obtenir le phosphate avec une bonne pureté et un bon rendement au bout de 120 min contre plusieurs dizaines d'heure sans ajout d'eau. A partir d'une certaine proportion, l'eau ajoutée permet également de fluidifier le mélange de départ, ce qui permet de favoriser l'opération mécanique de mélange. Il convient de mentionner que l'utilisation de tout liquide ne convient pas même si le liquide est susceptible de fluidifier le mélange. Ainsi, par exemple, des essais conduits en présence d'éthanol anhydre ou d'un hydrocarbure liquide n'ont pas permis d'obtenir le même effet.

La préparation du mélange précurseur repose sur le mélange de V₂O₅, de NH₄H₂PO₄ et d'eau dans un ordre quelconque. On peut par exemple selon un premier mode opératoire, mélanger intimement les deux poudres, rajouter l'eau au mélange des deux poudres et mélanger ensuite l'ensemble de façon à obtenir le mélange précurseur. On peut aussi selon un second mode opératoire, ajouter d'abord l'eau à l'un des deux réactifs, puis mélanger intimement le réactif auquel a été ajoutée l'eau, à l'autre réactif de façon à obtenir le mélange précurseur. C'est pourquoi on notera que le terme "ajouté" utilisé dans la présente demande signifie que dans le calcul de la proportion d'eau, on ne tient pas compte de l'eau éventuellement présente initialement dans les deux réactifs (à ce propos, le composé NH₄H₂PO₄ est connu pour être hydroscopique de sorte qu'il peut contenir des traces d'eau). Le terme "ajouté" ne signifie ainsi pas que l'invention est limitée au premier mode opératoire par lequel les deux réactifs sont préalablement mélangés avant l'ajout de l'eau. Autrement dit encore, l'invention est aussi relative à un procédé de préparation du phosphate de formule (NH₄)(VO₂)(HPO₄) consistant à agiter un mélange formé de V₂O₅ et de NH₄H₂PO₄, ces deux réactifs étant tous deux à l'état solide, ainsi que d'eau dont la proportion initiale est comprise entre 0,1% et 200,0%, cette proportion étant calculée en poids par rapport à l'ensemble des deux réactifs V₂O₅ et NH₄H₂PO₄ et ne tenant pas compte de l'eau éventuellement présente initialement dans les deux réactifs.

Le mélange précurseur peut être obtenu dans un outil de mélange adapté à la forme physique du mélange précurseur. Par exemple, dans le cas d'une poudre d'apparence sèche, on peut utiliser à l'échelle du laboratoire un moulin à café.

Selon la proportion en eau dans le mélange précurseur, celui-ci se présente sous plusieurs formes physiques. Lorsque la proportion en eau est faible, généralement comprise entre 0,1% et 10,0%, voire entre 0,5% et 10,0%, le mélange précurseur peut se présenter sous forme d'une poudre. Cette poudre apparaît sèche malgré la présence d'eau. La réaction chimique (II) est alors mise en oeuvre en utilisant un moyen de broyage réactif.

Dans le broyage réactif, qui relève de la mécanochimie, une réaction chimique est induite directement lors du broyage par l'absorption d'énergie mécanique. Le moyen de broyage réactif a pour fonction d'une part d'homogénéiser le mélange réactionnel et d'autre part, d'induire la réaction chimique. Le moyen de broyage réactif peut être par exemple un broyeur à billes, un broyeur à boulets, un broyeur planétaire, un broyeur vibrant ou une extrudeuse. La poudre récupérée est constituée du phosphate de vanadium (NH₄VO₂HPO₄). Il est possible éventuellement de tamiser la poudre récupérée afin d'obtenir une poudre de granulométrie voulue.

Le mélange précurseur peut se présenter également sous la forme d'une dispersion relativement épaisse et visqueuse. La proportion en eau est alors généralement comprise entre 10,0% et 50,0%. Le mélange est alors agité avec tout outil de mélange adapté aux milieux visqueux, comme par exemple un malaxeur. Lorsque la réaction progresse, on observe que la viscosité du mélange augmente pour conduire à une pâte visqueuse.

Lorsque la proportion en eau est plus élevée, généralement comprise entre 50,0% et 200,0%, le mélange précurseur se présente sous la forme d'une dispersion fluide. Il est alors possible d'agiter le mélange à l'aide d'un agitateur à hélice ou d'un agitateur à pâles inclinées. Lorsque la réaction progresse, on observe que la viscosité du mélange augmente pour conduire à une pâte visqueuse. L'augmentation de la viscosité peut rendre l'agitation plus difficile, d'autant plus que la réaction est conduite à une température proche de la température ambiante, par exemple à une température comprise entre 20°C et 30°C. Aussi, pour faciliter l'agitation du mélange, la proportion en eau est de préférence d'au moins 75,0%, voire d'au moins 80,0%. La proportion peut être comprise entre 75,0% et 150,0%, voire entre 80,0% et 150,0%.

Au-delà d'une proportion de 200,0%, on a constaté que le phosphate de vanadium est susceptible de se redissoudre dans l'eau et de conduire à un produit contenant le phosphate de vanadium accompagné d'une seconde phase de type NH₄VO_{0,64}P_{0,33}O₃ et NH₄H₂PO₄. Ce mélange est susceptible lors de la calcination et de sa décomposition de donner un VPO₄ contenant une impureté déficitaire en phosphate de type VO₂.

La réaction (II) peut être conduite à une température qui n'a pas à être élevée. Ainsi, cette température peut être d'au plus 100°C, voire d'au plus 60°C, voire même d'au plus 30°C. La durée de la réaction dépend de la quantité d'eau ajoutée, de l'état de division des solides utilisés au départ ainsi que de la forme physique du mélange précurseur. Cette durée est généralement comprise entre 2 h et 60 h.

Il est possible de suivre l'état d'avancement de la réaction (II) selon plusieurs méthodes. Une première méthode visuelle consiste à disperser sous ultrasons 15 mg d'un échantillon prélevé au cours de la réaction dans 5 ml d'eau désionisée. Lorsqu'il reste des réactifs de départ, le mélange ainsi formé se présente sous la forme d'une dispersion opaque alors que lorsque l'avancement est bien avancé, le mélange ainsi formé se présente sous forme d'une solution translucide de couleur jaune vif. De façon plus quantitative, selon une seconde méthode, on peut suivre la réaction chimique en analysant à l'aide d'un diffractomètre aux rayons X (DRX) les échantillons prélevés au cours de la réaction. Les pics caractéristiques des réactifs de départ disparaissent progressivement. Il a été constaté que les pics de ces réactifs sont encore visibles lorsqu'on ajoute à du phosphate de vanadium pur, 5% de V₂O₅ ou bien 5% de NH₄H₂PO₄. Comme on constate qu'il est possible d'obtenir des diffractogrammes du produit final sans présence de pics caractéristiques des deux réactifs de départ, on peut ainsi conclure que le produit final contient moins de 5% en poids de V₂O₅ et moins de 5% en poids de NH₄H₂PO₄.

Le procédé de l'invention peut conduire à un phosphate de vanadium de bonne pureté. Ce phosphate de vanadium peut contenir moins de 5% en poids, plus particulièrement moins de 3% en poids, voire moins de 1% en poids de V₂O₅ résiduel. Ce phosphate de vanadium peut contenir moins de 5% en poids, plus particulièrement moins de 3% en poids, voire moins de 1% en poids de NH₄H₂PO₄ résiduel. La proportion de ces composés peut être déterminée par toute technique d'analyse permettant de donner la teneur en ces composés avec une précision suffisante dans ces gammes de concentrations. Il peut s'agir par exemple de la spectroscopie infrarouge.

Le procédé ainsi décrit permet donc d'obtenir un phosphate de vanadium avec un bon rendement. De plus, ce procédé présente les avantages suivants qui ont déjà été esquissés précédemment :
- la réaction permet d'éviter des rejets inutiles des réactifs de départ ;
- le procédé est simple à mettre en oeuvre puisqu'il suffit de récupérer le produit issu de la réaction (II) sans avoir à le laver ou à le purifier. Il peut-être juste nécessaire de tamiser ce produit et/ou de le sécher pour éliminer l'eau.

L'invention est aussi relative au phosphate de formule (NH₄)(VO₂)(HPO₄) susceptible d'être obtenu par le procédé de l'invention.

Le phosphate de vanadium NH₄VO₂HPO₄ est transformé en VPO₄ (orthophosphate de vanadium) par chauffage du phosphate de vanadium en milieu réducteur à une température d'au moins 800°C. Le milieu réducteur peut être à base d'hydrogène, tel qu'un mélange d'un gaz neutre comme l'argon et de dihydrogène, ou à base de noir de carbone. Un exemple de transformation est donnée par la réaction (I) et dans ce cas, le milieu réducteur est constitué par du noir de carbone qui est ajouté aux réactifs.

La température à laquelle a lieu la transformation en VPO₄ est de préférence comprise entre 800°C et 1000°C pour développer la cristallinité du produit (VPO₄ de structure orthorhombique) tout en évitant la décomposition du VPO₄. Il est préférable d'utiliser un phosphate de vanadium présentant un taux d'impuretés résiduelle faible. Ainsi, il est possible d'utiliser un phosphate de vanadium contenant moins de 5% en poids, plus particulièrement moins de 3% en poids, voire moins de 1% en poids de V₂O₅ résiduel, ou bien un phosphate de vanadium contenant moins de 5% en poids, plus particulièrement moins de 3% en poids, voire moins de 1% en poids de NH₄H₂PO₄ résiduel.

Il a également été constaté qu'il est possible d'effectuer la transformation sans utiliser d'hydrogène. On peut préparer le VPO₄ à partir de phosphate de formule (NH₄)(VO₂)(HPO₄) ou d'un mélange formé de V₂O₅ et de NH₄H₂PO₄, en chauffant à une température d'au moins 800°C le phosphate ou le mélange dans un milieu confiné de façon à ce que le NH₃ qui est libéré par la réaction ou une partie de celui-ci reste en contact avec le mélange réactionnel. Le phosphate de vanadium (NH₄)(VO₂)(HPO₄) utilisé dans cette transformation peut être préparé selon le procédé qui a été décrit précédemment et qui utilise un mélange précurseur contenant de l'eau.

On peut faire en sorte que le milieu soit confiné en empêchant le NH₃ formé lors de la réaction de transformation de s'échapper du milieu dans lequel se produit la réaction. Dans les exemples, on a recouvert d'un couvercle les creusets dans lesquels se produit la réaction de transformation. Dans le cas où la réaction de transformation se produit à plus grande échelle, il est possible d'utiliser un réacteur qui est fermé de façon à contenir le NH₃ qui se libère. Il n'est pas nécessaire que le réacteur soit hermétiquement clos, il suffit que le NH₃ libéré reste contenu dans le réacteur pendant la réaction de transformation. Par ailleurs, il est important de minimiser la quantité d'oxygène résiduel dans le réacteur pour éviter l'oxydation du VPO₄. Un moyen pour cela consiste à faire en sorte que le mélange réactionnel remplisse un grand volume du réacteur fermé. Il est également possible d'éviter la présence d'oxygène à l'aide d'un balayage du réacteur par un gaz neutre comme par exemple l'azote ou l'argon. On peut effectuer ce balayage avant le début de la réaction de transformation et/ou pendant celle-ci. Ainsi, il est possible de remplir le réacteur avec un gaz neutre préalablement à la réaction, de charger le réacteur avec les réactifs, puis de fermer le réacteur pour empêcher la rentrée d'oxygène.

La durée du chauffage conduisant au VPO₄ n'est pas critique et dépend de la température utilisée. Elle peut être généralement comprise entre 30 min et 5 h. Dans les exemples, une calcination à 800°C pendant 3 h a permis d'obtenir le VPO₄ recherché.

Il est également possible de mélanger au phosphate de vanadium (NH₄)(VO₂)(HPO₄) ou d'un mélange formé de V₂O₅ et de NH₄H₂PO₄, du noir de carbone. Dans ce cas, par rapport au procédé de carboréduction connu, il est possible d'utiliser moins de noir de carbone car, dans ce cas, la réduction a lieu à la fois en présence de NH₃ mais aussi du noir de carbone qui a été ajouté.

Le mélange phosphate de vanadium NH₄VO₂HPO₄/ noir de carbone peut être préparé ex *situ* à partir du phosphate de vanadium déjà préparé par ailleurs, notamment par le procédé en présence d'eau décrit ci-dessus. Il est également possible de préparer le mélange *in situ* à partir de V₂O₅ et de NH₄H₂PO₄. Dans ce cas, on ajoute directement au mélange formé de V₂O₅ et de NH₄H₂PO₄ le noir de carbone.

Le VPO₄ peut être utilisé pour la préparation de NVPF. Pour ce faire, on expose sous atmosphère inerte, un mélange formé de VPO₄ avec une quantité efficace de fluorure de sodium, NaF, et d'au moins un composé hydrocarboné et oxygéné, source en carbone élémentaire, à des conditions de température propices permettant d'obtenir le NVPF. Ainsi, l'invention est aussi relative à un procédé de préparation de NVPF comprenant les étapes suivantes :
- au cours d'une 1^{ère} étape, on prépare du VPO₄ en chauffant un phosphate de formule (NH₄)(VO₂)(HPO₄) ou un mélange formé de V₂O₅ et de NH₄H₂PO₄ à une température d'au moins 800°C dans un milieu confiné de façon à ce que le NH₃ qui est libéré par la réaction ou une partie de celui-ci reste en contact avec le mélange réactionnel, cette réaction pouvant éventuellement avoir lieu en présence de noir de carbone mélangé au(x) réactif(s) ;
- au cours d'une 2^{ème} étape, on expose sous atmosphère inerte, un mélange formé du VPO₄ de l'étape 1 avec une quantité efficace de fluorure de sodium, NaF, et éventuellement d'au moins un composé hydrocarboné et oxygéné, source en carbone élémentaire, à des conditions de température propices à l'obtention du NVPF.

Tout ce qui a été vu plus haut pour le procédé de préparation du VPO₄ s'applique identiquement pour le procédé de préparation du NVPF.

A l'issue de l'étape 2, le NVPF peut être éventuellement lavé à l'eau et séché.

L'étape 2 met en oeuvre un mélange formé de fluorure de sodium comme source à la fois en ions sodium et en ion fluorure et éventuellement d'au moins un composé hydrocarboné et oxygéné apte à générer du carbone élémentaire. Le mélange comprend le VPO₄ et le NaF de préférence dans un rapport stoechiométrique.

En ce qui concerne le composé hydrocarboné et oxygéné, il peut notamment s'agir d'un sucre tel que par exemple le glucose, le saccharose et le fructose ou d'un carbohydrate tel que par exemple l'amidon ou un dérivé cellulosique. Plus préférentiellement, il s'agit d'un dérivé cellulosique et encore plus particulièrement de cellulose microcristalline. La décomposition du composé hydrocarboné et oxygéné lors de l'étape 2 est dédiée d'une part à recouvrir d'une couche de carbone conducteur le NVPF et d'autre part à procurer une protection accrue aux ions vanadium V³⁺ contre un phénomène d'oxydation en V⁴⁺ durant le traitement thermique. La proportion du composé hydrocarboné et oxygéné dans le mélange à base de VPO₄ et de NaF peut être comprise entre 1,0% et 50,0% en poids, cette proportion étant calculée par rapport à l'ensemble du mélange VPO₄, NaF et composé hydrocarboné et oxygéné. Par exemple, un tel mélange peut comprendre 160 g de VPO₄, 70 g de NaF et 23 g de cellulose.

L'étape 2 est conduite dans des conditions de température propices à l'obtention du NVPF. La température peut être d'au moins 700°C. Elle peut être comprise par exemple entre 800°C et 1000°C.

Le NVPF est approprié à une utilisation en tant que matériau actif d'électrodes pour batteries au sodium ou pour batteries sodium-ion.

### Exemples

### Exemple 1 (comparatif) : préparation du phosphate par broyage réactif

L'essai a été conduit à la température ambiante, à l'air, en utilisant un récipient cylindrique de 200 mL en polyéthylène rempli de billes d'alumine (diamètre 5 mm et 20 mm). Le récipient est rempli de :
- 28,0 g de V₂O₅ ;
- 35,4 g de NH₄H₂PO₄ ;
- 66 g de billes de diamètre 5 mm + 120 g de billes de diamètre 20 mm.

Le récipient est mis en rotation autour de son axe de symétrie à la vitesse de 1 rotation/s, ce qui permet de mélanger le mélange précurseur et de favoriser la réaction entre V₂O₅ et NH₄H₂PO₄. Durant le broyage, on prélève à plusieurs moments (2 h ; 8 h ; 24 h ; 32 h; 48 h et 56 h) des échantillons (1 g) du mélange. On peut suivre au cours du broyage l'évolution de la couleur du mélange : passage d'une couleur brune à une couleur jaune intense. Il est également possible de suivre l'évolution de leurs capacités à se dissoudre lors du test de dissolution. Les images de microscopie électronique en balayage permettent également de constater la diminution en taille des particules constitutives des poudres. La diffraction des rayons X permet également de constater qu'au cours du broyage, apparaît la phase béta-NH₄VO₂HPO₄ et la disparition conjointe des deux réactifs de départ (V₂O₅ et NH₄H₂PO₄).

Le phosphate obtenu après 56 h de broyage est calciné pendant 3 h à 800°C dans un atmosphère composée d'argon et de dihydrogène (5% en volume). On obtient un VPO₄ de bonne pureté phasique.

### Exemple 2 (comparatif) : cas d'un mélange réalisé par agitation sans billes

L'exemple 1 est reproduit mais sans les billes. On constate alors d'une part qu'il n'est pas possible d'obtenir le phosphate NH₄VO₂HPO₄. D'autre part, la calcination du mélange à l'issue de l'agitation sans les billes ne conduit pas à du VPO₄ de bonne pureté phasique. En effet, on décèle certains des pics du phosphate à côté de pic caractéristiques de V₂O₃. En outre, une image du creuset obtenu dans ce type de situation montre bien l'inhomogénéité du produit obtenu.

### Exemple 2 (comparatif) :

Des essais pour lesquels il n'est pas possible d'obtenir le phosphate de vanadium par broyage ne permettent pas d'obtenir un VPO₄ de bonne pureté phasique.

### Exemple 3 (selon invention) : préparation du phosphate par broyage réactif en présence d'eau (< 10%)

Il a été constaté qu'en répétant l'exemple 1 avec un mélange précurseur comprenant de l'eau jusqu'à une proportion d'au plus 10% en poids (essais à 0,1% ; 1% ; 10%), il est possible d'obtenir le phosphate avec une bonne pureté en seulement 2 heures. Le mélange précurseur se présente dans ce cas sous la forme d'une poudre d'apparence sèche.

### Exemple 4 (selon invention) : préparation du phosphate de vanadium par agitation en présence d'eau (> 100%)

Lorsque le mélange précurseur comprend plus de 100% d'eau, il se présente sous la forme d'une dispersion, qui est agitée de façon vive avec un agitateur turbula. Cet agitateur fonctionne selon un mouvement tridimensionnel et le récipient dans lequel est placé le mélange réactionnel est soumis à un mouvement pulsé rythmique changeant continuellement. On observe que la viscosité du mélange augmente au cours de la réaction.

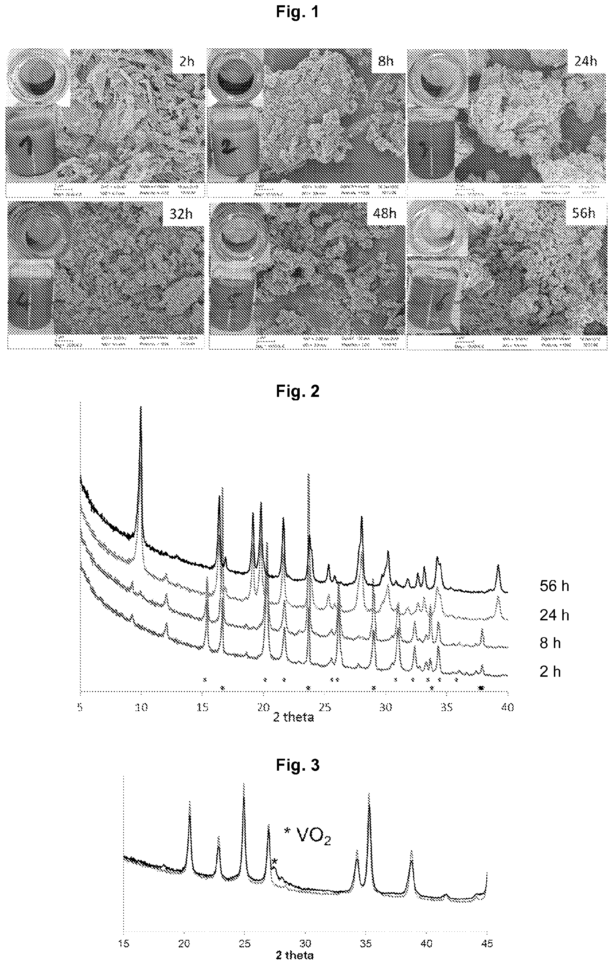

On a observé par ailleurs qu'au-delà d'une proportion en eau de 200% (essais à 500%, 1000% et 2000%), on détecte sur les diffractogrammes de rayons X, la présence des composés ayant pour formule NH₄VO_{0,64}P_{0,33}O₃ (composé sous-stoechiométrique) et NH₄H₂PO₄ et qui proviendraient de la dissolution partielle du phosphate NH₄VO₂HPO₄. Après chauffage à 800°C, on observe la formation de VPO₄ et de VO₂ (Fig. 3). Ceci n'a pas été observé pour une proportion en eau inférieure ou égale à 200%.

On observe aussi que la réaction semble moins rapide au-delà de 200%.

### Exemple 5 (comparatif) : remplacement de l'eau par de l'éthanol anhydre

L'essai mené dans les conditions de l'exemple 4 en remplaçant l'eau par 200% d'éthanol ne permet pas, même après un broyage prolongé de 30 h, d'obtenir un VPO₄ de bonne pureté phasique après calcination à 800°C dans une atmosphère Ar/H₂.

### Exemple 6 : utilisation d'une atmosphère confinée lors de la préparation du phosphate VPO₄

On peut calciner NH₄VO₂HPO₄ sous une atmosphère Ar/H₂ à 800°C durant 3 h pour obtenir VPO₄ avec une bonne pureté phasique. Il a été aussi observé que la calcination à 800°C pendant 3 h de NH₄VO₂HPO₄ en milieu confiné (creusets fermés par un couvercle) peut conduire à une réduction autogène. Dans ce cas, le vanadium au degré d'oxydation V est réduit par l'ammoniac émis lors de la décomposition du produit. Dans un milieu non-confiné, il a été observé à l'inverse qu'il se forme les composés VOPO₄ et VOPO₇ qui correspondent aux formes oxydés.

### Exemple 7 : calcination de NH₄VO₂HPO₄ en présence d'un réducteur carboné (noir de carbone) en milieu confiné

Dans les conditions de l'exemple 6, on a utilisé un mélange composé de phosphate de vanadium et de noir de carbone. On a observé dans ce cas, la moindre présence V₄(P₂O₇)₃ avec une teneur de l'ordre de quelques % seulement.

## Revendications

1. Procédé de préparation du phosphate de formule (NH₄)(VO₂)(HPO₄) consistant à agiter un mélange formé de V₂O₅ et de NH₄H₂PO₄ à l'état solide dans lequel a été ajoutée de l'eau dans une proportion initiale comprise entre 0,1% et 200,0%, cette proportion étant calculée par rapport à l'ensemble des deux réactifs V₂O₅ et NH₄H₂PO₄.

2. Procédé de préparation du phosphate de formule (NH₄)(VO₂)(HPO₄) consistant à agiter un mélange formé de V₂O₅ et de NH₄H₂PO₄, ces deux réactifs étant tous deux à l'état solide, ainsi que d'eau dont la proportion initiale est comprise entre 0,1% et 200,0%, cette proportion étant calculée en poids par rapport à l'ensemble des deux réactifs V₂O₅ et NH₄H₂PO₄ et ne tenant pas compte de l'eau éventuellement présente initialement dans les deux réactifs.

3. Procédé selon la revendication 1 ou 2 dans lequel V₂O₅ et NH₄H₂PO₄ sont sous forme de poudres dont les particules présentent un diamètre d₅₀ d'au plus 100 µm, voire d'au plus 50 µm, d₅₀ étant le diamètre médian obtenu à partir d'une distribution de tailles en volume déterminée par un granulomètre laser.

4. Procédé selon l'une des revendications précédentes dans lequel le mélange formé de V₂O₅ et de NH₄H₂PO₄ est dans un rapport molaire initial V / P compris entre 0,9 et 1,1, voire entre 0,95 et 1,05.

5. Procédé selon l'une des revendications précédentes dans lequel le mélange formé de V₂O₅ et NH₄H₂PO₄ se présente sous forme d'une poudre, d'une pâte ou d'une dispersion fluide.

6. Procédé selon l'une des revendications précédentes dans lequel le mélange formé est soumis à un broyage réactif.

7. Procédé selon l'une des revendications précédentes dans lequel la réaction de préparation du phosphate de formule (NH₄)(VO₂)(HPO₄) est conduite à une température d'au plus 100°C, voire d'au plus 60°C.

8. Procédé selon l'une des revendications précédentes dans lequel le phosphate de formule (NH₄)(VO₂)(HPO₄) contient moins de 5% en poids, plus particulièrement moins de 3% en poids, voire moins de 1% en poids de V₂O₅ résiduel.

9. Procédé selon l'une des revendications précédentes dans lequel le phosphate de formule (NH₄)(VO₂)(HPO₄) contient moins de 5% en poids, plus particulièrement moins de 3% en poids, voire moins de 1% en poids de NH₄H₂PO₄ résiduel.

10. Procédé selon l'une des revendications précédentes dans lequel le produit issu de la réaction est tamisé et/ou séché pour éliminer l'eau.

11. Procédé selon l'une des revendications précédentes dans lequel la proportion initiale en eau est :
- d'au moins 0,5%, voire d'au moins 0,7%, voire encore d'au moins 1,0% ; ou
- d'au moins 75,0%, voire d'au moins 80,0%; ou
- comprise entre 0,1% et 10,0%, voire entre 0,5% et 10,0%; ou
- comprise entre 10,0% et 50,0%; ou
- comprise entre 75,0% et 150,0%, voire entre 80,0% et 150,0%.

## Patentansprüche

1. Verfahren zur Herstellung des Phosphats der Formel (NH₄) (VO₂) (HPO₄), das daraus besteht, ein aus V₂O₅ und NH₄H₂PO₄ gebildetes Gemisch im festen Zustand zu rühren, wobei Wasser mit einem anfänglichen Anteil zwischen 0,1 % und 200,0 % zugegeben wurde, wobei dieser Anteil in Bezug auf die Gesamtheit der beiden Reagenzien V₂O₅ und NH₄H₂PO₄ berechnet wird.

2. Verfahren zur Herstellung des Phosphats der Formel (NH₄) (VO₂) (HPO₄), das daraus besteht, ein aus V₂O₅ und NH₄H₂PO₄ bestehendes Gemisch, wobei diese beiden Reagenzien beide im festen Zustand vorliegen, sowie Wasser, dessen anfänglicher Anteil zwischen 0,1 % und 200,0 % beträgt, zu rühren, wobei dieser Anteil bezogen auf das Gewicht in Bezug auf die Gesamtheit der beiden Reagenzien V₂O₅ und NH₄H₂PO₄ berechnet wird und Wasser, das gegebenenfalls anfänglich in den beiden Reagenzien vorhanden ist, nicht berücksichtigt wird.

3. Verfahren nach Anspruch 1 oder 2, wobei V₂O₅ und NH₄H₂PO₄ in Form von Pulvern vorliegen, deren Partikel einen Durchmesser d₅₀ von höchstens 100 µm oder sogar höchstens 50 µm aufweisen, wobei d₅₀ der mediane Durchmesser ist, der mittels einer volumenbezogene Größenverteilung erhalten wird, die mit einem Laser-Partikelmessgerät bestimmt wird.

4. Verfahren nach einem der vorhergehenden Ansprüche, wobei das Gemisch aus V₂O₅ und NH₄H₂PO₄ mit einem anfänglichen V/P-Molverhältnis zwischen 0,9 und 1,1 oder sogar zwischen 0,95 und 1,05 vorliegt.

5. Verfahren nach einem der vorhergehenden Ansprüche, wobei das Gemisch aus V₂O₅ und NH₄H₂PO₄ in Form eines Pulvers, einer Paste oder einer flüssigen Dispersion vorliegt.

6. Verfahren nach einem der vorstehenden Ansprüche, wobei das gebildete Gemisch einem Reaktivmahlen unterzogen wird.

7. Verfahren nach einem der vorhergehenden Ansprüche, wobei die Reaktion zur Herstellung des Phosphats der Formel (NH₄) (VO₂) (HPO₄) bei einer Temperatur von höchstens 100 °C oder sogar höchstens 60 °C durchgeführt wird.

8. Verfahren nach einem der vorhergehenden Ansprüche, wobei das Phosphat der Formel (NH₄) (VO₂) (HPO₄) weniger als 5 Gew.-%, noch mehr bevorzugt weniger als 3 Gew.-% oder sogar weniger als 1 Gew.-% restliches V₂O₅ enthält.

9. Verfahren nach einem der vorhergehenden Ansprüche, wobei das Phosphat der Formel (NH₄) (VO₂) (HPO₄) weniger als 5 Gew.-%, noch mehr bevorzugt weniger als 3 Gew.-% oder sogar weniger als 1 Gew.-% restliches NH₄H₂PO₄ enthält.

10. Verfahren nach einem der vorhergehenden Ansprüche, wobei das Reaktionsprodukt gesiebt und/oder getrocknet wird, um das Wasser zu entfernen.

11. Verfahren nach einem der vorhergehenden Ansprüche, wobei der anfängliche Wasseranteil wie folgt ist:
- mindestens 0,5 % oder sogar mindestens 0,7 % oder sogar noch mindestens 1,0 % oder
- mindestens 75,0 % oder sogar mindestens 80,0 % oder
- zwischen 0,1 % und 10,0 % oder sogar zwischen 0,5 % und 10,0 % oder
- zwischen 10,0 % und 50,0 % oder
- zwischen 75,0 % und 150,0 % oder sogar zwischen 80,0 % und 150,0 %.

## Claims

1. Process for preparing the phosphate of formula (NH₄) (VO₂) (HPO₄) consisting in stirring a mixture formed of V₂O₅ and of NH₄H₂PO₄ in the solid state to which water has been added in an initial proportion of between 0.1% and 200.0%, this proportion being calculated relative to the whole of the two reactants V₂O₅ and NH₄H₂PO₄.

2. Process for preparing the phosphate of formula (NH₄) (VO₂) (HPO₄) consisting in stirring a mixture formed of V₂O₅ and of NH₄H₂PO₄, these two reactants both being in the solid state, and also of water, the initial proportion of which is between 0.1% and 200.0%, this proportion being calculated by weight relative to the whole of the two reactants V₂O₅ and NH₄H₂PO₄ and not taking into account the water optionally present initially in the two reactants.

3. Process according to Claim 1 or 2, wherein V₂O₅ and NH₄H₂PO₄ are in the form of powders, the particles of which have a diameter d₅₀ of at most 100 um, or of at most 50 um, d₅₀ being the median diameter obtained from a volume size distribution determined by a laser particle size analyser.

4. Process according to one of the preceding claims, wherein the mixture formed of V₂O₅ and of NH₄H₂PO₄ is in an initial V / P molar ratio of between 0.9 and 1.1, or between 0.95 and 1.05.

5. Process according to one of the preceding claims, wherein the mixture formed of V₂O₅ and of NH₄H₂PO₄ is in the form of a powder, a paste or a fluid dispersion.

6. Process according to one of the preceding claims, wherein the mixture formed is subjected to reactive milling.

7. Process according to one of the preceding claims, wherein the reaction for preparing the phosphate of formula (NH₄) (VO₂) (HPO₄) is conducted at a temperature of at most 100°C, or of at most 60°C.

8. Process according to one of the preceding claims, wherein the phosphate of formula (NH₄) (VO₂) (HPO₄) contains less than 5% by weight, more particularly less than 3% by weight, or less than 1% by weight of residual V₂O₅.

9. Process according to one of the preceding claims, wherein the phosphate of formula (NH₄) (VO₂) (HPO₄) contains less than 5% by weight, more particularly less than 3% by weight, or less than 1% by weight of residual NH₄H₂PO₄.

10. Process according to one of the preceding claims, wherein the product derived from the reaction is screened and/or dried to eliminate the water.

11. Process according to one of the preceding claims, wherein the initial proportion of water is:
- at least 0.5%, or at least 0.7%, or even at least 1.0%; or
- at least 75.0%, or at least 80.0%; or
- between 0.1% and 10.0%, or between 0.5% and 10.0%; or
- between 10.0% and 50.0%; or
- between 75.0% and 150.0%, or between 80.0% and 150.0%.
